# EUROPEAN PATENT SPECIFICATION

(11) **EP 4 667 762 B1**
(45) Date of publication and mention of the grant of the patent: **02.12.2026**
(21) Application number: 25183544.3
(22) Date of filing: 18.06.2025
(51) Int. Cl.: F16C 19/26, F16C 33/36, F16C 33/30

(54) **ROLLER AND ROLLER BEARING**
ROLLE UND ROLLENLAGER
ROULEAU ET ROULEMENT À ROULEAUX

(30) Priority: 20.06.2024 JP 2024099570
(43) Date of publication of application: 24.12.2025
(73) Proprietor: NTN Corporation, Osaka-shi Osaka 530-0005 (JP)
(72) Inventor: KUNIKATA, Yusuke, Kuwana-shi, Mie, 511-8678 (JP)
(74) Representative: Maikowski & Ninnemann Patentanwälte Partnerschaft mbB

(56) References cited:
- WO-A1-2016/133211
- JP-A- 2014 005 846
- JP-A- H05 164 132

## Description

### BACKGROUND OF THE INVENTION

### (Field of the Invention)

The present invention relates to a roller and a roller bearing and, in particular, relates to a roller and a roller bearing for use in a general-purpose motor, an electric generator, a traction motor for a railway vehicle, or other such devices that structurally may pass electrical current through the bearing and that do not put significant load on the bearing during use.

### (Description of Related Art)

A bearing may suffer from electrolytic corrosion when used in a device that structurally may pass electrical current through the bearing. Technical measures and others thereagainst in the past have been proposed in which a ceramic insulating coating is formed on a component such as an outer ring and a resin insulating coating is formed on the surface of a bearing ring.

Among others proposed in the conventional art were rolling contact bearings that are designed for electric motors and exhibit superior performance to such traditionally used bearings as ceramic spray-insulated bearings or resin-insulated bearings (JP Laid-open Patent Publication No. 2023-002235). As shown in Fig. 7, the rolling contact bearings take the form of a cylindrical roller bearing that includes a pair of bearing rings 50 and 51 and a plurality of rolling elements 52 interposed between the pair of bearing rings 50 and 51. The rolling elements 52 are in the form of ceramic rollers whose rolling surfaces do not have any crowned segments. At least one of the bearing rings 50 has a surface that opposes the other of the bearing rings and is formed of crowned segments 50a and 50a on the axially opposite ends of the surface and a straight segment 50b between the crowned segments 50a and 50a.

A similar ceramic bearing roller is described in document WO 2016/133211 A1.

Lately, a better insulation property is sought for a bearing because, due to the rising performance of motors, there is more chance that high frequency electrical current may pass through the bearing. Since higher rotational speeds are also increasingly used, the bearing is also required to exhibit better rotational performance. By using ceramic rollers, improved insulation performance can be achieved, and also, high-speed rotations can be coped with thanks to their small density. However, the ceramics are hard, and therefore, it is difficult to process them, thereby leads to higher cost.

### SUMMARY OF THE INVENTION

An object of the present invention is to provide a roller and a roller bearing which constitute a low-cost bearing that can prevent electrolytic corrosion and also cope with high-speed rotations.

The present invention provides a roller made of a ceramic material and designed to be interposed between an inner ring and an outer ring. The roller includes: a roller end face; a roller outer peripheral surface of the roller; and an edge-treated corner of the roller. The roller outer peripheral surface includes: crowned segments on the axially opposite ends of the roller outer peripheral surface; and a straight segment joining the crowned segments. The edge-treated corner is located between the roller end face and each of the crowned segments. The roller satisfies the following pattern A according to equations (1) and (2): $0.85 \left(L-2Lc\right) \leq Ls$ (1) $0.0005 Dw \leq Dx$ (2) where L indicates the total length of the roller, Lc indicates the axial length of the edge-treated corner, Ls indicates the length of the straight segment, Dw indicates the roller diameter of the roller, and Dx indicates a drop amount that represents a generatrix height difference produced by the crowned segments. The term "roller" refers to a cylindrical roller, a needle roller, or a tapered roller.

According to this configuration, the use of a roller made of a ceramic material achieves improved insulation performance, and also, can cope with high-speed rotations thanks to its relatively low density as compared to a roller made of a steel material. The length Ls of the straight segment of the roller is equal to or greater than 85% of the value obtained by subtracting the axial lengths of the edge-treated corners from the total length L of the roller, and the drop amount Dx is equal to or greater than 0.05% of the roller diameter Dw. In this way, the specific load that occurs under the commercially used conditions will not reach such a value that would affect its function adversely, and better high-speed rotations can be realized than traditional ceramic spray-insulated bearings or resin coating-insulated bearings. Even though the roller made of a ceramic material is hard and therefore can be expensive to process, its manufacturing cost can be kept low since only a minimal processing work is necessary to produce the drop amount Dx. When it comes to the insulation performance of a roller bearing, no conductive path is built between the roller and the raceway surfaces of inner and outer rings thanks to the fact that the roller itself is made of a ceramic material. Hence, the possibility of electrolytic corrosion is almost completely eradicated, in contrast to traditional ceramic spray-insulated bearings or resin coating-insulated bearings.

The roller wholly may satisfy the following pattern B according to equations (3) and (4): $0.90 \left(L-2Lc\right) \leq Ls$ (3) $0.001 Dw \leq Dx$ (4).

The geometry of the outer peripheral surface of the roller made of a ceramic material has been reconsidered in this case to present a minimal level of processing that would be required to ensure its adequate performance during use while simultaneously lowering its manufacturing cost relative to those in the conventional art.

In a not claimed example, on the roller, the edge-treated corner and each of the crowned segments may be smoothly joined, and the straight segment and each of the crowned segments may be smoothly joined. According to this configuration, it can be avoided that the roller makes edge contact with the raceway surface of an inner or outer ring, thereby preventing a stress from concentrating in a local area of that raceway surface.

The roller may be formed of a ceramic material including silicon nitride. Silicon nitride excels in properties like a high-temperature mechanical strength, a thermal shock resistance, a wear resistance, a corrosion resistance, electrical insulation, and a high toughness. Therefore, a roller made of a ceramic material including silicon nitride exhibits excellent performance as a roller and makes it possible to provide a roller bearing that is reliable over an extended period of time.

The present invention provides a roller bearing which includes an inner ring, an outer ring, and a plurality of rollers interposed between the inner ring and the outer ring, in which each of the rollers is a roller according to the present invention.

The roller bearing may be configured to be used in an electric motor or an electric generator. Such a roller bearing with improved insulation performance can prevent electrolytic corrosion, even when it is employed under conditions in which high frequency electrical current may pass through the bearing due to the advanced performance of electric motors or electric generators.

Any combinations of at least two features disclosed in the claims and/or the specification and/or the drawings should also be construed as encompassed by the present disclosure. Especially, any combinations of two or more of the claims should also be construed as encompassed by the present disclosure.

### BRIEF DESCRIPTION OF THE DRAWINGS

The present disclosure will be more clearly understood from the following description of preferred embodiments made with reference to the accompanying drawings. However, the embodiments and the drawings are given merely for the purpose of illustration and explanation, and should not be used to delimit the scope of the present disclosure, which scope is to be delimited by the appended claims. In the accompanying drawings, alike numerals are assigned to and indicate alike parts throughout the different figures:
Fig. 1 is a longitudinal cross-sectional view of a roller bearing in accordance with a first embodiment of the present invention;
Fig. 2 is a front elevational view of a roller of the roller bearing;
Fig. 3 is a fragmentary enlarged, detail view of a part III in Fig. 2;
Fig. 4 is a cross-sectional view of an electric motor that illustrates an example application of the roller bearing to an electric motor;
Fig. 5 is a longitudinal cross-sectional view of a roller bearing in accordance with a second embodiment of the present invention;
Fig. 6 is a perspective view of a roller bearing in accordance with a third embodiment of the present invention; and

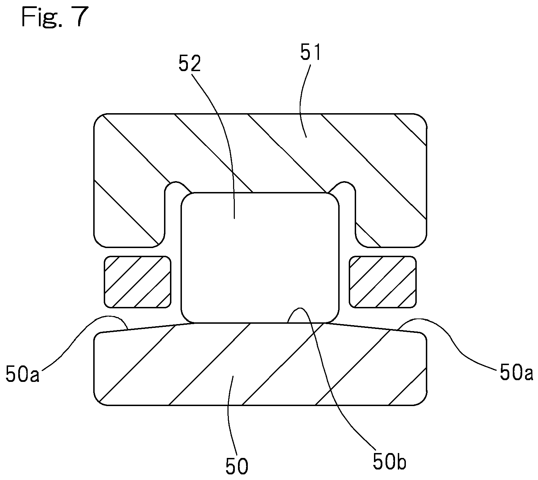

Fig. 7 is a longitudinal cross-sectional view of a cylindrical roller bearing in the conventional art.

### DESCRIPTION OF EMBODIMENTS

### (First Embodiment (NU design))

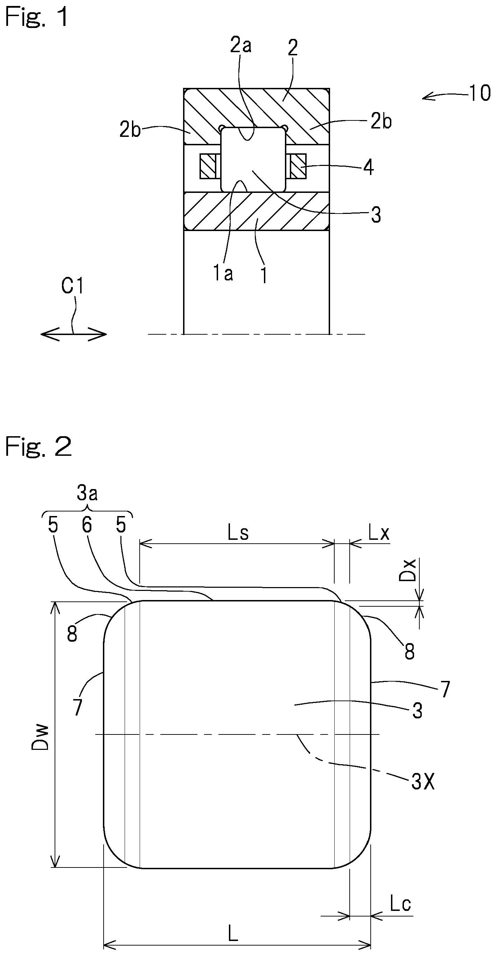

A roller bearing in accordance with an embodiment of the present invention will be described in connection with Figs. 1 to 3. A roller bearing according to embodiments can be in the form of a single-row cylindrical roller bearing for use in a general-purpose motor, an electric generator, and a traction motor for a railway vehicle, for example.

### <General Configuration of Cylindrical Roller Bearing>

Fig. 1 depicts a cylindrical roller bearing 10 of an NU design, which includes: an inner ring 1, an outer ring 2; cylindrical rollers (or rollers) 3 interposed between the raceway surface 1a of the inner ring 1 and the raceway surface 2a of the outer ring 2; and a cage 4 that retains the cylindrical rollers 3. The inner ring 1 has no ribs, while the outer ring 2 has a raceway surface 2a with ribs 2b and 2b on the axially opposite sides of the raceway surface 2a. The cylindrical roller bearing 10 represents a type of so-called radial roller bearings in which an outer ring 2 is arranged radially outwards of the outer peripheral surface of an inner ring 1.

The inner ring 1 and the outer ring 2 are formed of a bearing steel, an alloy for machine structural use, a carbon steel for machine structural use, or other such metal material, for example. The cylindrical rollers 3 are made of a ceramic material as will be further discussed later. Cylindrical rollers 3 can be commercially traded as independent products. The cylindrical roller bearing 10 retains the cylindrical rollers 3 in the pockets of the cage 4, but may alternatively take the form of a full complement roller bearing with no cage. Any directions pointing along the central axis of the inner ring 1 and outer ring 2 or any directions parallel to such directions will be denoted herein as an "axial direction" C1. Any directions perpendicular to the "axial direction" C1 will be denoted herein as a "radial direction". Moreover, any directions pointing along the axis 3X of a cylindrical roller 3 will be denoted herein as the "axial direction" of that cylindrical roller.

In cylindrical roller bearings 10 of an Nu design, the preassembled unit of an outer ring 2, the cylindrical rollers 3, and a cage 4 can be separated from an inner ring 1 in an axial direction C1. The cage 4 retains the cylindrical rollers 3 at certain intervals in a circumferential direction. The cage 4 is in the form of a metal or resinous, machined or pressed cage. Examples of a metal material for the cage include a cold rolled steel, a hot rolled steel, and brass. In the following discussions, the cylindrical roller or rollers 3 will be simply referred to as "roller 3" or "rollers 3".

### <Detailed Features of Roller>

Referring to Fig. 2, the rollers 3 are formed of a ceramic material including silicon nitride. More specifically, the rollers 3 are made of a ceramic material including silicon nitride (Si3N4) as a principal component. Examples of the ceramic material are not limited to silicon nitride and may include zirconia (Zr) and alumina (Al2O3).

Each of the rollers 3 has a roller outer peripheral surface 3a that includes: crowned segments 5 and 5 on the axially opposite ends of the roller outer peripheral surface 3a; and a straight segment 6 joining the crowned segments 5 and 5. In a cross section of each roller 3 as cut along a plane containing the roller axis 3X, the straight segment 6 has a contour that is rectilinear while each of the crowned segments 5 has a progressively decreasing diameter towards a corresponding one of the axial opposite ends of the respective roller 3. Each roller 3 has edge-treated corners 8 respectively located between a roller end face 7 and each of the crowned segments 5.

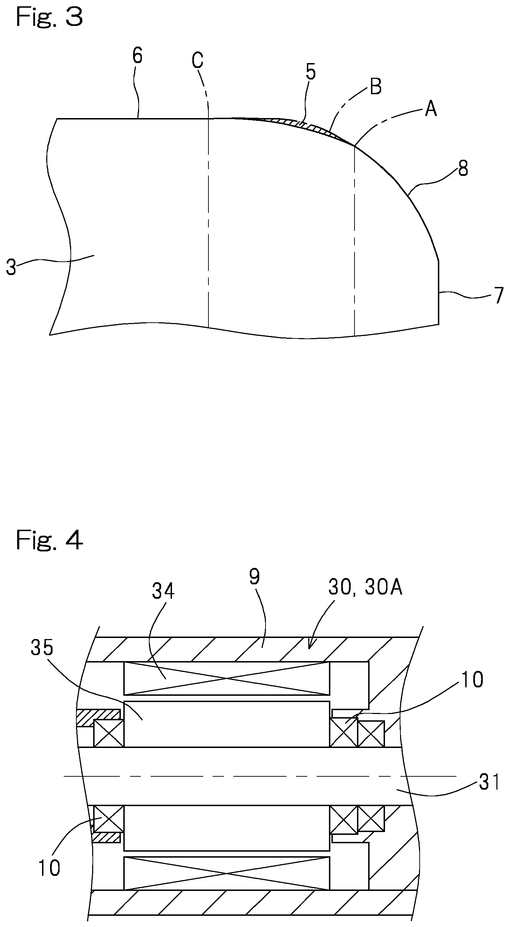

Each roller 3 has a so-called, planar end face. The edge-treated corners 8 are bullnosed. Referring to Fig. 2, the centers of the radii of curvature of the bullnosed corners are positioned inside each roller 3. For instance, the crowned segments 5 are each formed of a crowning or logarithmic crowning geometry that is defined by a single radius or a composite of radii. As shown in Fig. 3, on each roller 3, the edge-treated corners 8 and the crowned segments 5 are smoothly joined, and the straight segment 6 and the crowned segments 5 are smoothly joined. Joining points A between the edge-treated corners 8 and the crowned segments 5 and joining points C between the straight segment 6 and the crowned segments 5 are both hypothetically indicated by dotted-dashed lines in Fig. 3.

Referring back to Fig. 2, the axial lengths Lc of the edge-treated corners 8 as bullnosed corners are selected on the basis of the maximum allowable dimension rs max of an edge-treated corner of a roller according to JIS B 1506 which is in compliance with ISO 3096 issued by the International Organization for Standardization (which is abbreviated as ISO), for example. Alternatively, the axial lengths Lc of the edge-treated corners 8 as bullnosed corners may not comply with JIS B 1506.

### <Parameters>

Each roller 3 wholly satisfies the following equations (1) and (2): $0.85 \left(L-2Lc\right) \leq Ls$ (1) $0.0005 Dw \leq Dx$ (2) where L indicates the total length of that roller 3, Lc indicates the axial length of each edge-treated corner 8, Ls indicates the length of the straight segment 6, Dw indicates the roller diameter of that roller 3, and Dx indicates a drop amount that represents a generatrix height difference produced by the crowned segments 5.

Equations (1) and (2) are characterized by a longer length Ls for the straight segment 6 than conventional rollers, and an edge radiusing process can be used to obtain the drop amount for the crowned segments 5 by aggressively machining the portion denoted by the imaginary line B shown in Fig. 3. Further, a minimum required drop amount Dx for the crowned segments 5 shown in Fig. 2 can be ascertained therefrom, which amount will allow the function of the bearing to be realized inexpensively.

It should be noted that the length Ls of the straight segment 6 and the drop amount Dx are measured in the following way: a shape measurement instrument is used to acquire the cross-sectional profile of a roller 3, and the length of the straight segment 6 is calculated therefrom and used as the value for Ls. The boundary between the straight segment 6 and each of the crowned segments 5 is defined as a position spaced from the straight segment 6 by a distance with an associated drop amount (or outer diameter reduction) of 1 µm.

The drop amount Dx is a measured difference in generatrix height between the straight segment 6 and the crowned segments 5. The total length L of a roller is a distance between the opposite end faces of that roller. These can be measured with a block gauge or a dial gauge.

Each roller 3 wholly may satisfy the following equations (3) and (4): $0.90 \left(L-2Lc\right) \leq Ls$ (3) $0.001 Dw \leq Dx$ (4).

### <Effects and Advantages>

According to the cylindrical roller bearing 10 described above with respect to Fig. 1, the use of rollers 3 made of a ceramic material achieves improved insulation performance, and also, can cope with high-speed rotations thanks to their relatively low density as compared to rollers made of a steel material. As shown in Fig. 2, the length Ls of the straight segment 6 of each roller 3 is equal to or greater than 85% of the value obtained by subtracting the axial lengths of the edge-treated corners 8 from the total length L of that roller 3, and the drop amount Dx is equal to or greater than 0.05% of the roller diameter Dw.

In this way, the specific load that occurs under the commercially used conditions will not reach such a value that would affect their functions adversely, and better high-speed rotations can be realized than traditional ceramic spray-insulated bearings or resin coating-insulated bearings. Even though the rollers 3 made of a ceramic material are hard and therefore can be expensive to process, their manufacturing cost can be kept low since only a minimal processing work is necessary to produce the drop amount Dx. When it comes to the insulation performance of the roller bearing, no conductive path is built between the rollers 3 and the raceway surfaces 1a and 2a of the inner and outer rings 1 and 2 thanks to the fact that the rollers 3 themselves are made of a ceramic material. Hence, the possibility of electrolytic corrosion is almost completely eradicated, in contrast to traditional ceramic spray-insulated bearings or resin coating-insulated bearings.

The geometry of the outer peripheral surface 3a of each roller 3 made of a ceramic material has been reconsidered to find the above-described equations (3) and (4) which are to be wholly satisfied to present a minimal level of processing. Thus, adequate performance can be ensured during use while simultaneously lowering its manufacturing cost relative to those in the conventional art.

As shown in Fig. 3, the edge-treated corners 8 and the crowned segments 5 are smoothly joined, and the straight segment 6 and the crowned segments 5 are smoothly joined. Thus, referring to Fig. 1, it is avoided that the rollers 3 make edge contact with the raceway surface 1a or 2a of the inner ring 1 or outer ring 2. As a result, it can be prevented that a stress concentrates in a local area of the raceway surface 1a or 2a.

The rollers 3 are formed of a ceramic material including silicon nitride. Silicon nitride excels in properties like a high-temperature mechanical strength, a thermal shock resistance, a wear resistance, a corrosion resistance, electrical insulation, and a high toughness. Therefore, the rollers 3 made of a ceramic material including silicon nitride exhibit excellent performance as rollers and make it possible to provide a roller bearing 10 that is reliable over an extended period of time.

### <Example Application to Electric Motor>

As shown in Fig. 4, an electric motor 30 includes: a stator 34 fixed to a housing 9; a rotor 35 facing the stator 34 across a prescribed radial gap in a radially inner position relative thereto; and a shaft 31 rotatably supporting the rotor 35. The housing 9 is provided with the roller bearings 10 and 10 with a prescribed distance therebetween on the axially opposite sides of the housing 9, which bearing 10 rotatably support the shaft 31 on the roller bearings 10 and 10. Examples of the electric motor 30 include a surface permanent magnet motor or SPM synchronous motor, and an IPM (or interior permanent magnet) synchronous motor.

A variety of other types of electric motors 30 can also be used including a switched reluctance motor or SR motor and an induction motor (or IM). The roller bearings 10 and 10 can also be used with an electric generator 30A having the sole function of electricity generation, in place of the electric motor 30. The electrical generator 30A in this context has a similar structure to that of the electric motor 30.

### <Further Embodiments>

For the rest of the description, features corresponding to those already discussed with respect to the preceding embodiments are assigned with reference symbols similar to those previously used, and will not be described again to avoid redundancy. Where only a subset of features within a configuration are described, the remaining features should be considered as equivalent to those of the previously discussed embodiments unless otherwise noted. Identical features produce identical effects and advantages. In addition to the combinations of features particularly described with respect to individual embodiments, the embodiments themselves can also be partially combined with each other unless such combinations are found to be inoperable.

### [Second Embodiment (N design)]

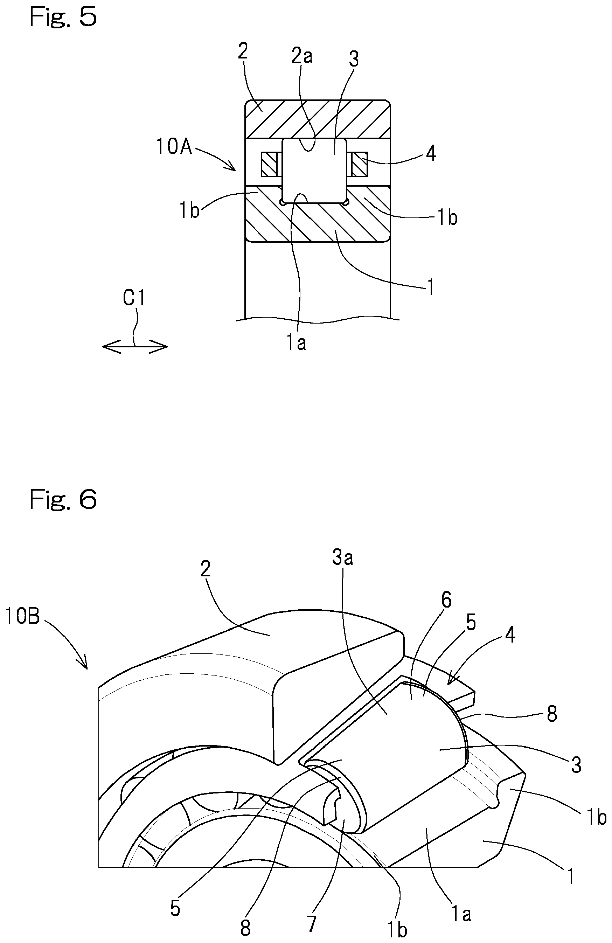

Referring to Fig. 5, a cylindrical roller bearing 10A of an N design is configured such that an outer ring 2 has no ribs while an inner ring 1 has a raceway surface 1a with ribs 1b and 1b on the axially opposite sides of the raceway surface 1a. In cylindrical roller bearings 10A of an N design, the preassembled unit of an inner ring 1, cylindrical rollers 3, and a cage 4 can be separated from an outer ring 2 in an axial direction C1. The details of the features of the rollers 3 are similar to those of the first embodiment described above. Thus, the cylindrical roller bearings 10A of an N design produce similar effects and advantages to those according to the first embodiment.

### [Third Embodiment (cylindrical roller bearing)]

As can be seen from a third embodiment shown in Fig. 6, tapered roller bearings 10B can be adapted to be roller bearings according to the present invention. The details of the features of the rollers 3 (or tapered rollers) thereof are similar to those of the first embodiment described above. In this scenario, the roller diameter of each tapered roller 3 at an axial center thereof is used as the roller diameter Dw in equations (2) and (4) described above. The tapered roller bearings 10B according to the third embodiment produce similar effects and advantages to the roller bearings according to the first embodiment.

Needle roller bearings, double-row cylindrical roller bearings, four-row cylindrical roller bearings, and thrust roller bearings can also be adapted to be roller bearings according to the present invention. Roller bearings according to the present invention can even be applied to electric motors and electric generators of an axial gap design.

While preferred embodiments have been described thus far with reference to the drawings, various additions, modifications, or omissions can be made. The invention is defined by the appended claims.

### Reference Symbols

- 1: inner ring
- 2: outer ring
- 3: cylindrical roller (or roller)
- 3a: roller outer peripheral surface
- 5: crowned segment
- 6: straight segment
- 7: roller end face
- 8: edge-treated corner
- 10, 10A: cylindrical roller bearing
- 10B: tapered roller bearing
- 30: electric motor
- 30A: electric generator

## Claims

1. A roller (3) made of a ceramic material and designed to be interposed between an inner ring (1) and an outer ring (2), the roller (3) comprising:
a roller end face (7);
a roller outer peripheral surface (3a) including crowned segments (5) on axially opposite ends thereof and a straight segment (6) joining the crowned segments (5); **characterised in that**
an edge-treated corner (8) located between the roller end face (7) and each of the crowned segments (5), wherein
the roller (3) satisfies the following pattern A according to equations (1) and (2): $0.85 \left(L-2Lc\right) \leq Ls$ (1) $0.0005 Dw \leq Dx$ (2)
where L indicates a total length of the roller (3), Lc indicates an axial length of the edge-treated corner (8), Ls indicates a length of the straight segment (6), Dw indicates a roller diameter of the roller (3), and Dx indicates a drop amount that represents a generatrix height difference produced by the crowned segments (5).

2. The roller (3) as claimed in claim 1, wherein the roller (3) wholly satisfies the following pattern B according to equations (3) and (4): $0.90 \left(L-2Lc\right) \leq Ls$ (3) $0.001 Dw \leq Dx$ (4).

3. The roller (3) as claimed in claim 1 or 2, wherein the roller (3) is formed of a ceramic material including silicon nitride.

4. A roller bearing (10, 10A, 10B) comprising:
an inner ring (1);
an outer ring (2); and
rollers (3) interposed between the inner ring (1) and the outer ring (2), each of the rollers (3) being a roller (3) as claimed in claim 1 or 2.

5. The roller bearing (10, 10A, 10B) as claimed in claim 4, wherein the roller bearing (10, 10A, 10B) is configured to be used in an electric motor (30) or an electric generator (30A).

## Patentansprüche

1. Rolle (3), die aus einem keramischen Material hergestellt und dazu ausgelegt ist, zwischen einem Innenring (1) und einem Außenring (2) angeordnet zu werden, wobei die Rolle (3) Folgendes umfasst:
eine Rollenstirnfläche (7);
eine Rollenaußenumfangsfläche (3a), die ballige Abschnitte (5) an ihren axial gegenüberliegenden Enden und einen geraden Abschnitt (6), der die balligen Abschnitte (5) verbindet, umfasst;
**dadurch gekennzeichnet, dass** eine kantenbearbeitete Ecke (8) zwischen der Rollenstirnfläche (7) und jedem der balligen Abschnitte (5) angeordnet ist, wobei
die Rolle (3) das folgende Schema A gemäß den Gleichungen (1) und (2) erfüllt: $0 , 85 \left(L-2Lc\right) \leq Ls$ (1) $0 , 0005 Dw \leq Dx$ (2)
wobei L eine Gesamtlänge der Rolle (3) angibt, Lc eine axiale Länge der kantenbearbeiteten Ecke (8) angibt, Ls eine Länge des geraden Abschnitts (6) angibt, Dw einen Rollendurchmesser der Rolle (3) angibt und Dx einen Abfallbetrag angibt, der eine durch die balligen Abschnitte (5) erzeugte Höhendifferenz einer Mantellinie darstellt.

2. Rolle (3) nach Anspruch 1, wobei die Rolle (3) das folgende Schema B gemäß den Gleichungen (3) und (4) vollständig erfüllt: $0 , 90 \left(L-2Lc\right) \leq Ls$ (3) $0 , 001 Dw \leq Dx$ (4)

3. Rolle (3) nach Anspruch 1 oder 2, wobei die Rolle (3) aus einem keramischen Material gebildet ist, das Siliziumnitrid enthält.

4. Rollenlager (10, 10A, 10B), umfassend:
einen Innenring (1);
einen Außenring (2); und
Rollen (3), die zwischen dem Innenring (1) und dem Außenring (2) angeordnet sind, wobei jede der Rollen (3) eine Rolle (3) nach Anspruch 1 oder 2 ist.

5. Rollenlager (10, 10A, 10B) nach Anspruch 4, wobei das Rollenlager (10, 10A, 10B) dazu eingerichtet ist, in einem Elektromotor (30) oder einem elektrischen Generator (30A) verwendet zu werden.

## Revendications

1. Rouleau (3) fabriqué en un matériau céramique et conçu pour être interposé entre une bague intérieure (1) et une bague extérieure (2), le rouleau (3) comprenant :
une face d'extrémité du rouleau (7) ;
une surface périphérique extérieure du rouleau (3a) comprenant des segments bombés (5) à ses extrémités axialement opposées et un segment rectiligne (6) reliant les segments bombés (5) ;
**caractérisé en ce qu'**un coin à arête traitée (8) est situé entre la face d'extrémité du rouleau (7) et chacun des segments bombés (5), où
le rouleau (3) satisfait au schéma A suivant conformément aux équations (1) et (2) : $0 , 85 \left(L-2Lc\right) \leq Ls$ (1) $0 , 0005 Dw \leq Dx$ (2)
où L indique une longueur totale du rouleau (3), Lc indique une longueur axiale du coin à arête traitée (8), Ls indique une longueur du segment rectiligne (6), Dw indique un diamètre de rouleau du rouleau (3), et Dx indique une valeur d'abaissement qui représente une différence de hauteur d'une génératrice produite par les segments bombés (5).

2. Rouleau (3) selon la revendication 1, où le rouleau (3) satisfait intégralement au schéma B suivant conformément aux équations (3) et (4) : $0 , 90 \left(L-2Lc\right) \leq Ls$ (3) $0 , 001 Dw \leq Dx$ (4)

3. Rouleau (3) selon la revendication 1 ou 2, où le rouleau (3) est formé d'un matériau céramique comprenant du nitrure de silicium.

4. Roulement à rouleaux (10, 10A, 10B) comprenant :
une bague intérieure (1) ;
une bague extérieure (2) ; et
des rouleaux (3) interposés entre la bague intérieure (1) et la bague extérieure (2), chacun des rouleaux (3) étant un rouleau (3) selon la revendication 1 ou 2.

5. Roulement à rouleaux (10, 10A, 10B) selon la revendication 4, où le roulement à rouleaux (10, 10A, 10B) est configuré pour être utilisé dans un moteur électrique (30) ou un générateur électrique (30A).
